**Europäisches Patentamt**

**European Patent Office**

**Office européen des brevets**

(19)

(11) Veröffentlichungsnummer : **0 331 903 B1**

# EUROPÄISCHE PATENTSCHRIFT

(12)

(45) Veröffentlichungstag der Patentschrift :
**29.04.92 Patentblatt 92/18**

(51) Int. Cl.⁵ : **G01N 1/14,** G01N 1/24, B07B 9/00

(21) Anmeldenummer : **89101859.0**

(22) Anmeldetag : **03.02.89**

(54) **Vorrichtung zum Aufbereiten von Proben aus einem Schüttgutstrom.**

(30) Priorität : **02.03.88 DE 3806677**

(43) Veröffentlichungstag der Anmeldung :
**13.09.89 Patentblatt 89/37**

(45) Bekanntmachung des Hinweises auf die
Patenterteilung :
**29.04.92 Patentblatt 92/18**

(84) Benannte Vertragsstaaten :
**DE ES GB GR SE**

(56) Entgegenhaltungen :
**WO-A-81/02065**
**DE-A- 3 231 944**
**DE-A- 3 503 043**
**DE-C- 3 616 218**
**US-A- 4 442 699**
**US-A- 4 485 747**

(73) Patentinhaber : **Rheinbraun
Aktiengesellschaft
Stüttgenweg 2
W-5000 Köln 41 (DE)**
Patentinhaber : **König, Reiner
Fliederweg 14
W-6236 Eschborn 2 (DE)**
Patentinhaber : **Sieglen, Rolf A.
Im Hohlweg 8a
W-6231 Sulzbach/Taunus (DE)**

(72) Erfinder : **Wolfrum, Erhard, Dipl.-Chem. Dr. rer.
nat.
W-5260 Düren (DE)**
Erfinder : **Faber, Wolfgang, Dipl.-Chem. Dr. rer.
nat.
W-5014 Kerpen (DE)**
Erfinder : **König, Reiner, Dipl.-Phys.
Fliederweg 14
W-6236 Eschborn (DE)**
Erfinder : **Sieglen, Rolf A., Dipl.-Ing.
Im Hohlweg 8a
W-6231 Sulzbach/Taunus (DE)**

(74) Vertreter : **Koepsell, Helmut, Dipl.-Ing.
Mittelstrasse 7
W-5000 Köln 1 (DE)**

EP 0 331 903 B1

## Beschreibung

Die Erfindung betrifft eine Vorrichtung zum Aufbereiten von Proben zwecks Bestimmung von repräsentativen chemischen und/oder physikalischen Kenngrößen des beprobten Materials, welches in Form eines Gemisches aus feinen und gröberen Staubpartikeln über eine Saugleitung einem Schüttgutstrom entnommen wird, wobei die Vorrichtung innerhalb wenigstens eines Gehäuses angeordnete Klassiermittel aufweist, um die zur Durchführung einer repräsentativen Analyse notwendige Kornfraktion aus dem Staubgemisch abzutrennen.

Aus der DE-OS 29 07 513 und der DE-PS 36 16 218 ist bekannt, daß aus Schüttgütern durch Absaugen einer bestimmten Fraktion aus dem beim Transport des jeweiligen Schüttgutes entstehenden Staub eine repräsentative Probe für eine nachfolgende Analyse gewonnen werden kann. Wesentliche Voraussetzung dafür, daß die Probe repräsentativ ist für die Gesamtheit des Materials, aus welchem sie stammt, ist die Einhaltung eines bestimmten Korngrößenbereiches, der in der DE-PS 36 16 218 als "Leitfraktion" bezeichnet wird, deren Zusammensetzung der durchschnittlichen Zusammensetzung der Gesamtheit aller Fraktionen des zu beprobenden Schüttgutes entspricht. Auf den Offenbarungsgehalt der beiden vorgenannten Veröffentlichungen wird dazu ausdrücklich Bezug genommen.

Aus der WO-A-8 102 065 ist eine Einrichtung zur Probenahme offenbart, die mit einer Saugvorrichtung versehen ist, mit deren Hilfe eine Staubprobe zunächst durch einen Vorfilter mit einer vorgegebenen Maschenweite angesaugt wird. Dieser Vorfilter bildet die Stirnseite eines zylindischen Gehäuses, innerhalb dessen eine hohlzylindrisches Sieb angeordnet ist, dessen Länge und Durchmesser mit der Maschenweite so abgestimmt sind, daß alle Staubteilchen, die größer als die Maschenweite dieses Hohlsiebes sind, einem Staubsammelbehälter zugeführt werden. Das Gehäuse ist außerhalb des Hohlsiebes mit einer Saugleitung verbunden, so daß der dadurch im Gehäuse bewirkte Unterdruck die Staubteilchen, die kleiner sind als der Maschenweite des Hohlsiebes entspricht, abgesaugt werden. Diese Vorrichtung dient zur Probenahme zur Bestimmung des Magnetit- und Phosphorgehalts von Eisenerzen.

Der Nachteil dieser Vorrichtung besteht einmal darin, daß der Vorfilter leicht verstopft, zumal die Siebfläche des Vorfilters relativ klein ist, da der Durchmesser des Gehäuses, innerhalb dessen das hohlzylindrische Sieb angeordnet ist, aus Gründen des Raumbedarfs so klein wie möglich sein sollte. Insbesondere dann, wenn das Schüttgut einen hohen Feuchtigkeitsgrad hat, wie es beispielsweise bei Rohbraunkohle der Fall ist, setzt sich das ebene Vorfilter sehr schnell zu. Ein anderer Nachteil der bekannten Vorrichtung besteht darin, daß sie außerordentlich leicht beschädigt werden kann, jedenfalls einem erheblichen Verschleiß unterliegt, da es im Betrieb beispielsweise eines Bergwerks und bei den großen zu handhabenden Materialströmen unvermeidbar ist, daß auch dann, wenn die Vorrichtung außerhalb der eigentlichen Materialströme positioniert ist, sie insbesondere im Bereich des Vorfilters, welcher der Öffnung zugeordnet ist, durch welche der Staub in die Vorrichtung eintritt, von Bestandteilen des Schüttgutstromes getroffen wird, so daß Beschädigungen der Klassiervorrichtung und somit Störungen im Betrieb der Gesamteinrichtung unvermeidbar sind.

Der Erfindung liegt somit die Aufgabe zugrunde, eine Vorrichtung der einleitend beschriebenen Art so auszugestalten, daß sie auch unter den rauhen Einsatzbedingungen eines Bergwerks und anderer Betriebe, in denen große Schüttgutströme zu fördern sind, einwandfrei funktioniert, und zwar auch im Dauerbetrieb derart, daß über lange Zeiträume kontinuierlich oder gleichmäßig getaktet in kurzen Zeitabständen Material für die zu analysierenden Proben gewonnen werden kann. Ferner soll es möglich sein, die Klassiermittel ohne großen Aufwand auszutauschen. Dies kann z. B. dann erforderlich sein, wenn von einer Leitfraktion mit einem bestimmten Körnungsband übergegangen werden soll auf eine andere Leitfraktion mit einem anderen Körnungsband. Ferner soll die Vorrichtung auch für solche Schüttgüter verwendbar sein, die beispielsweise wegen eines hohen Feuchtigkeitsgehaltes beim Klassieren Schwierigkeiten bereiten können.

Zur Lösung dieser Aufgabe schlägt die Erfindung vor, daß die Vorrichtung in einem Abstand von der Saugöffnung der Saugleitung und in einem Abstand vom Schüttgutstrom positioniert ist und mit einem innerhalb eines ersten Gehäuses angeordneten ersten Hohlsieb versehen ist, und die Eintrittsöffnung im ersten Gehäuse für das abgesaugte Gemisch außerhalb des ersten Hohlsiebes angeordnet ist, und das Innere dieses ersten Hohlsiebes über eine Leitung mit dem Inneren eines zweiten Hohlsiebes verbunden ist, das innerhalb eines zweiten Gehäuses angeordnet ist, welches außerhalb des zweiten Hohlsiebes mit einer Unterdruckquelle verbunden ist, und die innere Querschnittsfläche des jeweiligen Gehäuses größer ist als die maximale Querschnittsfläche des zugeordneten Hohlsiebs und das erste Hohlsieb den oberen Trennschnitt und das zweite Hohlsieb den unteren Trennschnitt der zur Durchführung der Analyse erforderlichen Kornfraktion bestimmt.

Aufgrund der Anordnung des ersten Hohlsiebs innerhalb eines Gehäuses und der Positionierung der Vorrichtung in einem Abstand von der Saugöffnung und in einem Abstand vom Schüttgutstrom ist eine Gewähr dafür gegeben, daß alle Teile der Vorrichtung mechanischen Beanspruchungen durch das Schüttgut nicht oder nur in so geringem Maße ausgesetzt ist, daß Beschädigungen, die zu Betriebsstörungen führen können, nicht zu befürchten sind. Die Verwendung von Hohlsieben hat den Vorteil, daß bei gegebenem Raumbedarf eine große Siebfläche verfügbar ist, die zudem aufgrund ihres gekrümmten Verlaufs nicht so leicht verstopft. Dies ist für einen kontinuierlichen oder nahezu kontinuierlichen Betrieb der Vorrichtung von entscheidender Bedeutung. Die Praxis hat gezeigt, daß es bei schwierigem Material, wie z. B. Rohbraunkohle, im Dauerbetrieb möglich ist, innerhalb etwa einer Minute eine Materialmenge anzusaugen und zu klassieren, die zur Gewinnung einer Probe zur Durchführung einer Analyse ausreicht. Dies gilt auch dann, wenn die Öffnungen des ersten Hohlsiebes so klein sind, daß sie nur Körner mit einer Größe unter 0,2 mm passieren lassen, und die Öffnungen des zweiten Hohlsiebes so klein sind, daß sie nur Körner mit einer Größe von weniger als 0,03 mm passieren lassen.

Das erste Hohlsieb ist vorteilhaft hohlzylindrisch ausgebildet, wobei es zur Erzielung günstiger Strömungsverhältnisse im ersten Gehäuse zweckmäßig ist, letzteres innenseitig ebenfalls zylindrisch zu begrenzen und das zugehörige Hohlsieb im Gehäuse koaxial zu diesem anzuordnen. Als besonders vorteilhaft hat sich eine Ausgestaltung herausgestellt, bei welcher die Eintrittsöffnung im ersten Gehäuse derart angeordnet ist, daß das Luft-Staub-Gemisch durch diese Eintrittsöffnung in einer Richtung in das Gehäuse eintritt, die ein direktes Auftreffen dieses Gemisches auf das innerhalb des Gehäuses befindliche erste Hohlsieb zumindest weitgehend vermeidet. Auf diese Weise wird die mechanische Beanspruchung des Hohlsiebes durch das Auftreffen der Staubpartikel merklich reduziert. Bei zylindrischer Ausführung des Innenraumes des Gehäuses kann die Anordnung so getroffen sein, daß die Eintrittsöffnung im ersten Gehäuse im wesentlichen tangential zu dessen innerer zylindrischen Begrenzung verläuft.

Die Erfindung sieht weiterhin die Möglichkeit vor, das erste Gehäuse mit einem verschließbaren Auslaß für jene Teile des Staubgemisches zu versehen, die nicht durch die Siebfläche des ersten Hohlsiebes hindurchgesaugt werden. Dieses Überkorn sammelt sich im unteren Bereich des Gehäuses, aus welchem es in geeigneter Weise durch Öffnen des Auslasses weggeführt wird.

Das zweite Hohlsieb kann ebenfalls hohlzylindrisch ausgebildet und innerhalb eines hohlzylindrischen zweiten Gehäuses zu diesem koaxial angeordnet sein.

Der Innenraum des zweiten Hohlsiebes kann über eine Rohrleitung mit dem Analysegerät verbunden sein, so daß die durch die Klassiervorgänge in beiden Gehäusen gebildete Leitfraktion kontinuierlich in das nachgeschaltete Analysesystem geführt werden kann.

Es ist somit möglich, kontinuierlich Staub in die Vorrichtung hineinzusaugen, dort kontinuierlich durch entsprechendes Klassieren die Leitfraktion zu bilden und diese kontinuierlich in das Analysegerät zu bringen. Auf diese Weise schafft die Erfindung die Möglichkeit, einen Förderstrom kontinuierlich zu beproben, wobei letzten Endes die Zeit, die erforderlich ist, um aus der kontinuierlich in das Analysegerät geförderten Leitfraktion die einzelnen Proben zu bilden und zu analysieren, maßgeblich ist für die Genauigkeit, mit welcher die Analysenergebnisse der Zusammensetzung des Schüttgutstromes entsprechen. Mit den heute zur Verfügung stehenden technischen Mitteln, beispielsweise der Röntgenfluoreszenzanalyse, ist es normalerweise möglich, bestimmte Bestandteile des Schüttgutes innerhalb sehr kurzer Zeit, die im Bereich von unter einer Minute liegen kann, auch quantitativ zu bestimmen.

Es ist natürlich auch möglich, das Gemisch aus feineren und gröberen Staubpartikeln diskontinuierlich über die Saugleitung dem Schüttgutstrom zu entnehmen. Dabei sollte jedoch sichergestellt sein, daß die Probenahmen in gleichmäßigen Zeitabständen erfolgen und jeweils die gleiche Zeitdauer aufweisen.

Als besonders zweckmäßig hat es sich herausgestellt, innerhalb des im wesentlichen zylindrischen ersten Hohlsiebes ein rotierendes Element anzuordnen, daß an seinen der inneren Siebfläche zugekehrten Bereichen mit Luftausläßöffnungen versehen ist, die im wesentlichen gegen die Siebfläche des ersten Hohlsiebes im Bedarfsfall zu reinigen dadurch, daß von innen Luft gegen die Siebflächen geblasen wird, so daß außen am Siebkörper anhaftendes Überkorn von diesem entfernt wird. Diese Reinigungsmaßnahme kann zwischen den Probenahmenzyklen, aber auch in den Stillstandzeiten der Vorrichtung durchgeführt werden. Falls die Probenhame durch Ansaugen des Gemisches aus feinen und größeren Staubpartikeln über einen längeren Zeitraum erfolgt, müßte gegebenenfalls zum Reinigen des ersten Hohlsiebes die Probenhame für eine kurze Zeit unterbrochen werden. Es ist ohnehin notwendig, von Zeit zu Zeit das Überkorn aus dem das erste Hohlsieb enthaltenden ersten Gehäuse durch Öffnen des daran angebrachten Auslasses zu entfernen.

In der Zeichnung ist ein Ausführungsbeispiel der Erfindung im Schema dargestellt. Es zeigen

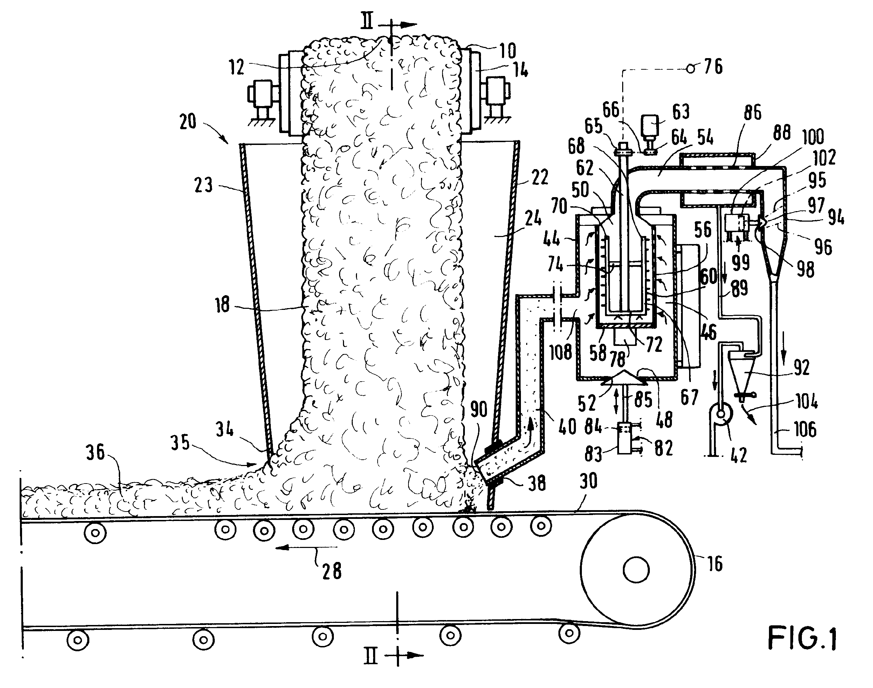

Fig. 1 die Seitenansicht eines Endes des aufnehmenden Förderbandes mit darüber angeordnetem Übergabetrichter sowie der Einrichtung zum Abtrennen der repräsentativen Kornfraktion,

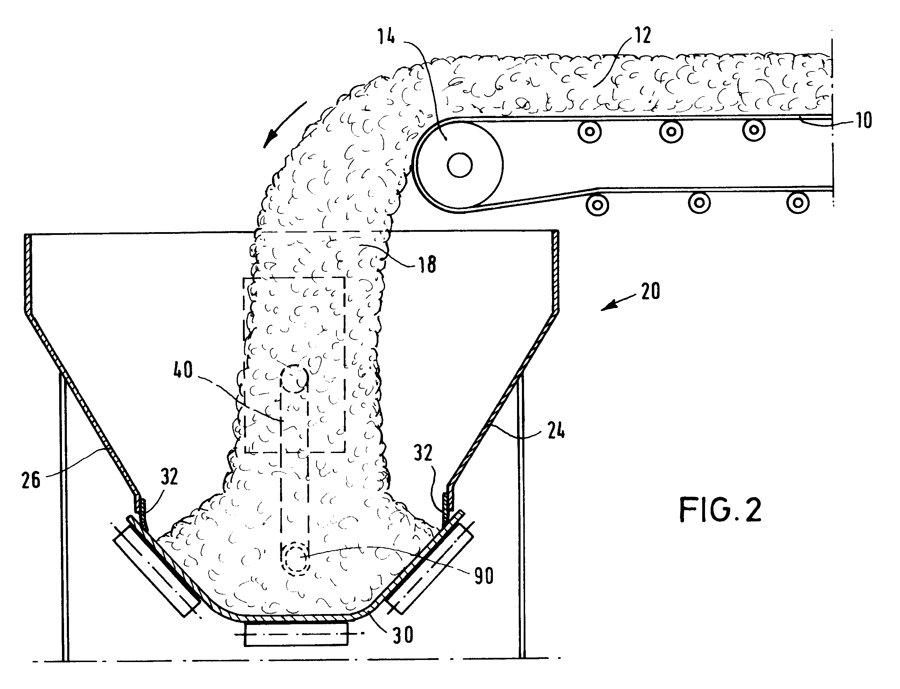

Fig. 2 die Ansicht in Richtung des Pfeiles II der Fig. 1.

Der auf dem abgebenden Förderband 10 ankommende Schüttgutstrom 12 wird an einer Umkehrtrommel 14 vom Förderband 10 abgeworfen und von einem zweiten Förderband 16 aufgenommen. Das abgebende Förderband 10 und das aufnehmende Förderband 16 sind bei dem in der Zeichnung dargestellten Ausführungsbeispiel im wesentlichen rechtwinklig zueinander verlaufend dargestellt. Die relative Lage der beiden Förderbänder ist jedoch für die Anwendung der Erfindung ohne Bedeutung.

Das vom abgebenden Förderband 10 abgeworfene Fördergut 12 überbrückt den Abstand zum aufnehmenden Förderband 16 in Form eines fallenden Förderstromes 18, der im wesentlichen parabelförmig verläuft. Unterhalb der Umkehr- oder Abwurftrommel 14 ist ein Übergabetrichter 20 angeordnet. Dieser Übergabetrichter weist vier Wandteile 22, 23, 24, 26 auf, die einen im wesentlichen rechteckigen, gegebenenfalls annähernd quadratischen Querschnitt begrenzen, der von unten nach oben zunimmt.

Die in Förderrichtung 28 des aufnehmenden Förderbandes 16 hintere Begrenzungswandung 22 und die beiden seitlichen Begrenzungswandungen 24 und 26 sind dabei so bemessen, daß sie unterseitig dicht oberhalb des Förderbandes 16 enden und somit kaum ein Durchgang zwischen dem oberen Trum 30 des das Fördergut aufnehmenden Förderbandes 16 und der jeweiligen unteren Begrenzung der genannten drei Wandungen vorhanden ist. Zusätzlich können im unteren Bereich der genannten Wandungen noch irgendwelche Abweiser oder dergleichen in Form von Streifen 32 aus gummielastischem Material vorhanden sein, die den Abstand zwischen jeweiliger unterer Begrenzung der drei Wände 22, 24 und 26 einerseits und dem Förderband 16 bzw. dessen Obertrum überbrücken und einen dort gegebenenfalls vorhandenen Spalt verschließen.

Lediglich die in Förderrichtung 28 des aufnehmenden Förderbandes 16 vordere Begrenzungswandung 23 des Übergabetrichters 20 endet in einem Abstand vom Obertrum 30 des aufnehmenden Förderbandes 16, so daß zwischen dem Obertrum 30 und der unteren Begrenzungskante 34 der Wandung 23 eine Öffnung 35 vorhanden ist, durch die das innerhalb des Übergabetrichters 20 auf dem Obertrum 30 des aufnehmenden Förderbandes 16 befindliche Fördergut in Förderrichtung 28 unter Bildung des auf dem Obertrum 30 befindlichen Schüttgutstromes 36 abtransportiert werden kann.

Bei dem in der Zeichnung dargestellten Ausführungsbeispiel ist die rückseitige Wandung 22 des Übergabetrichters 20 mit einer Durchbrechung 38 versehen, durch die ein flexibles Rohr oder ein Schlauch 40 derart in den unteren Bereich des Übergabetrichters 20 hineinragt, daß einerseits das freie Ende des Schlauches außerhalb des vom abgebenden Förderband 10 auf das aufnehmende Förderband 16 fallenden Förderstromes 18 bleibt, andererseits jedoch innerhalb des Übergabetrichters 20 angeordnet ist, so daß sich die Ansaugöffnung 90 dieses flexiblen Rohres oder Schlauches 40 innerhalb des Übergabetrichters zwischen dem fallenden Förderstrom 18 und der hinteren Begrenzungswandung 22 befindet, dabei jedoch so positioniert ist, daß kein Feststoff unter der Einwirkung lediglich der Schwerkraft in die Ansaugöffnung 90 hineinfallen kann.

Das flexible Rohr 40, dessen Durchmesser z. B. 100 mm betragen kann, ist in noch zu beschreibender Weise über Rohr- bzw. Schlauchleitungen mit einem Sauggebläse 42 verbunden, das einen Unterdruck erzeugt, der an der innerhalb des Übergabetrichters 20 befindlichen Ansaugöffnung des flexiblen Rohres oder Schlauches 40 anliegt.

Solange über das abgebende Förderband 10 Schüttgut zugefördert wird, befindet sich im gesamten Innenraum des Übergabetrichters 20 aufgewirbelter Staub, von dem ein Teil aufgrund des durch das Sauggebläse 42 erzeugten Unterdrucks durch die im Übergabetrichter 20 befindliche Ansaugöffnung 90 des flexiblen Rohres 40 angesaugt und durch letzteres hindurch in ein erstes Gehäuse 44 gelangt, dessen Innenraum 46 durch eine zylindrische Wandung begrenzt ist. Das Gehäuse 44 ist unterseitig und oberseitig mit jeweils einer im wesentlichen koaxial zum Gehäuse angeordneten Öffnung 48 bzw. 50 versehen, von denen die Öffnung 48 durch einen ventilähnlichen Körper 52 verschließbar ist. An die obere Öffnung 50 ist eine Rohrleitung 54 angeschlossen.

Innerhalb des Gehäuses 44 und koaxial zur Wandung von dessen Innenraum 46 ist ein ebenfalls zylindrisches Hohlsieb 56 angeordnet, das unterseitig durch einen Boden 58 verschlossen ist. Dieser Boden ist bei dem in der Zeichnung dargestellten Ausführungsbeispiel nicht als Siebgewebe, sondern als Platte oder Blech ausgebildet, die bzw. das keine Öffnungen aufweist. Es ist aber auch ohne weiteres möglich, den Boden 58 im Bedarfsfall als Sieb auszubilden. An seinem oberen Ende ist das Hohlsieb 56 offen. Der Durchmesser des Hohlsiebes ist so gewählt, daß er geringfügig größer ist als der der Öffnung 50, so daß letzere durch das Hohlsieb 56 gegenüber dem außerhalb des Hohlsiebes befindlichen Bereiches des Innenraumes 46 das Gehäuses 44 abgeschirmt ist.

Innerhalb des zylindrischen Hohlsiebes 56 und dazu koaxial ist ein Rotor 60 angeordnet, der von einer Hohlwelle 62 getragen wird. Letzere wird durch einen Motor 63 unter Zwischenschaltung eines Getriebes 64 angetrieben. Letzteres besteht aus zwei Riemenscheiben 64, 65 von denen erstere durch den Motor 63 angetrieben wird. Die Verbindung zwischen Riemenscheibe 64 und der auf der Hohlwelle 62 des Rotors 60 sitzenden Riemenscheibe 65 erfolgt über einen Riemen oder dergleichen 66.

Der Rotor 60 besteht im wesentlichen aus einem U-förmigen Rahmen 67, dessen Breite etwas kleiner ist als der Innendurchmesser des Hohlsiebes 56. Die beiden zur Hohlwelle 62 im wesentlichen parallel verlaufenden Rahmenteile 68, 70 sowie das untere, diese beiden Rahmenteile 68, 70 verbindende, quer verlaufende Rahmenteil 72 sind als Rohre ausgebildet, die an ihrer der Hohlwelle 62 abgekehrten Seite mit Bohrungen versehen sind, durch die Druckluft derart gerichtet austritt, daß ein Druckluftstrom entsteht, der nach außen gerichtet gegen die innere, zylindrische Begrenzungsfläche des Hohlsiebes 56 strömt. Das untere Rahmenteil 72 ist ebenfalls mit düsenartigen Bohrungen versehen, durch die Druckluft nach unten, also in Richtung auf den Boden 58 des Hohlsiebes 56 austritt.

Das Zuführen der Druckluft geschieht über die Hohlwelle 62, von der zwei quer verlaufende Rohrabschnitte 74 abgehen. Letztere sind mit dem Rohrsystem verbunden, das von den Rahmenteilen 68, 70 und 72 gebildet wird. Die Hohlwelle 62 ist mit einer Druckluftquelle 76 verbunden.

Am Boden 58 des Hohlsiebes 56 ist ein Vibrator 78 angebracht. Die elektrischen Anschlußleitungen für die Zuführung von Energie zur Betätigung des Vibrators sind aus Gründen der Übersichtlichkeit nicht dargestellt. Ausgestaltung und Anordnung des Vibrators und der Verbindungsleitungen sind jedem Fachmann geläufig.

Der Verschlußkörper 52, durch den die im Boden des Gehäuses 44 befindliche Öffnung 48 verschlossen werden kann, ist mit einer Betätigungseinrichtung 82 verbunden, die aus einem in einem Zylinder 83 geführten Kolben 84 besteht. Durch entsprechende Beaufschlagung des Kolbens 84, der über eine Kolbenstange 85 mit dem Verschlußkörper 52 verbunden ist, kann letzterer aus seiner in der Zeichnung dargestellten Schließposition nach unten verschoben werden, so daß die Öffnung 48 frei wird und im Gehäuse 44 befindlicher Staub durch die Öffnung austreten kann.

Die an die oben im Gehäuse 44 befindliche Öffnung 50 anschließende Rohrleitung 54 ist mit einem zweiten, im wesentlichen ebenfalls zylindrisch ausgebildeten Hohlsieb 86 verbunden, welches innerhalb eines zweiten Gehäuses 88 angeordnet ist. Der Innenraum des Gehäuses 88 ist mit einer Leitung 89 verbunden, an deren anderem Ende das bereits erwähnte Sauggebläse 42 angeschlossen ist, welches über den Innenraum des Gehäuses 88 sowie die Leitungen 54 und 40 den für das Ansaugen des Materials erforderlichen Unterdruck an der Ansaugöffnung 90 der Leitung 40 verursacht. Zwischen Gehäuse 88 und Sauggebläse 42 ist eine Abscheideeinrichtung 92 in Form eines Zyklons eingeschaltet.

Das innerhalb des zweiten Gehäuses 88 angeordnete zweite Hohlsieb 86 setzt sich in eine Leitung 94 größeren Durchmessers fort, in welcher zwei Siebe 95, 96 angeordnet sind, die die Leitung 94 quer durchsetzen und dabei etwas geneigt in Richtung auf eine in der Wandung der Leitung 94 angebrachte Öffnung 97 verlaufen, die durch einen ventilähnlichen Körper 98 verschließbar ist, der durch eine Betätigungseinrichtung 99, die einen Zylinder 100 und einen darin geführten Kolben 102 aufweist, zwischen Offenposition und Schließposition bewegt werden kann.

Aufgrund der vorbeschriebenen Verfahrensweisen, Anordnungen und Ausgestaltungen ist sichergestellt, daß das durch die Leitung 40 angesaugte feinkörnige Material eine Kornfraktion bildet oder enthält, die repräsentativ ist für den Abschnitt des Förderstromes, dem dieses angesaugte Material entstammt. Aufgrund der Tatsache, daß die Ansaugöffnung 90 nach unten weist, kann kein Material in die Leitung 40 gelangen, welches nicht angesaugt worden ist. Soweit besteht auch durch entsprechende Einstellung des durch das Sauggebläse 42 erzeugten Unterdrucks und/oder durch entsprechende Wahl des Ansaugquerschnittes die Möglichkeit, den Korngrößenbereich zu bestimmen, der durch die Ansaugöffnung 90 der Leitung 40 angesaugt wird. Der Übergabetrichter 20 schirmt den Bereich, aus welchem das Material abgesaugt wird, gegen äußere Einflüsse ab, so daß äußere Einflüsse, die zu einer ins Gewicht fallenden Verfälschung des genommenen Probematerials führen könnten, nicht wirksam werden.

Das durch die Ansaugöffnung 90 angesaugte feinkörnige Material gelangt in das Gehäuse 44, in welchem es unter der Einwirkung des durch das Sauggebläse 42 erzeugten Unterdrucks gegen die äußere Siebfläche des zylindrischen Hohlsiebes 56 gedrückt wird. Die Körner, die kleiner sind als die Sieböffnungen, passieren die Siebfläche des Hohlsiebes 56 und gelangen von dessen Innenraum in die Leitung 54.

Die Körner, deren Durchmesser größer ist als die Öffnungen der Siebfläche des Hohlsiebes 56, fallen z. T. von der Außenfläche des Hohlsiebes 56 nach unten. Dabei wird es sich im wesentlichen um die gröberen Körner des Überkorns, also jenes Anteils des angesaugten Staubes, der das Hohlsieb 56 nicht passieren kann, handeln. Die feineren Körner des Überkorns werden zumindest zu einem Teil an der äußeren Siebfläche des Hohlsiebes 56 haften bleiben. Diese Körner können, um ein Zusetzen des Siebes zu vermeiden, dadurch entfernt werden, daß in bestimmten Zeitabständen der Vibrator 78 betätigt wird. Die durch ihn bewirkten Erschütterungen führen dazu, daß zumindest ein großer Teil des Überkorns vom Hohlsieb 56 abfällt. Gegebenenfalls kann zusätzlich die Siebfläche von innen mit einem Luftstrom beaufschlagt werden, der aus den Düsen des Rotors 60 austritt. Es werden im allgemeinen einige Drehbewegungen des Rotors 60 genügen, um diese Reinigung des Siebes zu bewirken. Dabei wird es zweckmäßig sein, während der Reinigung den durch das Sauggebläse 42 bewirkten Unterdruck zumindest zu verringern, obwohl dies nicht unbedingt erforderlich ist.

Das sich im unteren Bereich des Gehäuses 44 sammelnde Überkorn kann in bestimmten Zeitabständen durch die Öffnung 48 entfernt werden, wobei es zweckmäßig sein kann, das Betätigen des Rotors einerseits und das Entfernen des Überkorns durch die Öffnung 48 gleichzeitig durchzuführen und während dieser Zeit das Sauggebläse 42 abzustellen.

EP 0 331 903 B1

Der Zeitpunkt, zu welchem das Hohlsieb 56 zu reinigen ist, kann durch Messen des Unterdrucks in Strömungsrichtung der Luft hinter dem Hohlsieb 56 festgestellt werden. Ein Ansteigen des Unterdrucks zeigt an, daß das Hohlsieb 56 mehr oder weniger verstopft ist.

Es ist auch möglich, den Vibrator 78 im Dauerbetrieb zu benutzen, um den Durchgang des Unterkorns durch das Sieb und die eventuell an ihm haftende Schicht aus Staub zu unterstützen. Bei dieser Betriebsweise würde aber nur eine leichte Vibration erzeugt werden, damit das angesaugte Material an der Siebaußenfläche gehalten wird und die Vibration das Hindurchtreten des Unterkorns durch das Sieb beschleunigt.

Im Gehäuse 44 wird somit durch das erste Hohlsieb 56 ein Trennschnitt bewirkt, der die maximale Korngröße des in das zweite Hohlsieb 86 gelangenden feinkörnigen Feststoffes bestimmt. Unter der Einwirkung des durch das Sauggebläse 42 bewirkten Unterdrucks erfolgt hier die Entfernung der feinsten Kornfraktion, wobei der Trennschnitt durch die Größe der Öffnungen des Hohlsiebes 86 festgelegt ist. Das Staub-Luftgemisch, welches diese feinste Fraktion enthält, wird durch die Leitung 89 zunächst in den Zyklon 92 geführt, in welchem der Feststoff zumindest zum größten Teil abgeschieden wird, bevor die Luft das Sauggebläse 42 passiert. Der im Zyklon 92 abgeschiedene Feststoff wird über eine Leitung 104 aus dem Zyklon 92 ausgetragen.

In die an das zweite Hohlsieb 86 anschließende Leitung 94 gelangt somit eine Kornfraktion, die durch Entfernen einer Fraktion oberhalb einer bestimmten Korngröße und einer Fraktion unterhalb einer bestimmten Korngröße eine mittlere Fraktion darstellt, die repräsentativ ist für das Material des Förderstromes, aus welchem diese mittlere Fraktion stammt. Es handelt sich also um die Kornfraktion, die in der DE-PS 36 16 218 als "Leitfraktion" bezeichnet ist.

Diese Leitfraktion ist vorher durch entsprechende Untersuchungen festzustellen, wobei dann auch die Größe der Öffnungen der Siebe entsprechend dem Körnungsbereich der Leitfraktion zu wählen ist. Aus der Leitung 94 gelangt diese für die Analyse vorgesehene Leitfraktion über die Verbindungsleitung 106 in die in der Zeichnung nicht dargestellte Analyseeinrichtung, die keinen Teil der Erfindung darstellt. Die in der Leitung 94 angeordneten Siebe 95 und 96 dienen dazu, Agglomerate, die sich während des Durchgangs durch die Leitung 54 und das Hohlsieb 86 gebildet haben, abzuscheiden. Es handelt sich dabei um eine Sicherheitsmaßnahme, die insbesondere verhindern soll, daß derartige Agglomerate bei der Handhabung des Probenmaterials in der Analyseeinrichtung zu Störungen führen. Zum Entfernen der Agglomerate wird der Ventilkörper 98 in größeren Zeitabständen in seine Offenlage verschoben. Das kann z. B. dann geschehen, wenn der der Öffnung 48 im ersten Gehäuse 44 zugeordnete Ventilkörper 52 sich in seiner Offenlage befindet.

Der Transport der Leitfraktion durch die Leitung 106 kann ebenfalls durch Unterdruck geschehen, wobei dieser dann so auf den durch das Sauggebläse 42 bewirkten Unterdruck abzustimmen ist, daß der Klassiervorgang am zweiten Hohlsieb 86 nicht gestört wird. Hierbei kann der Umstand ausgenutzt werden, daß die durch die Leitung 106 abgeförderten Partikel bei entsprechender Abstimmung der Unterdruckverhältnisse aufgrund ihrer größeren Masse durch die Saugwirkung des Sauggebläses 42 innerhalb des zweiten Gehäuses 38 nicht in Richtung auf die Leitung 89 umgelenkt werden.

## Patentansprüche

1. Vorrichtung zum Aufbereiten von Proben zwecks Bestimmung von repräsentativen chemischen und-/oder physikalischen Kenngrößen des beprobten Materials, welche in Form eines Gemisches aus feinen und gröberen Staubpartikeln über eine Saugleitung (40) einem Schüttgutstrom entnommen werden, wobei die Vorrichtung innerhalb wenigstens eines Gehäuses (44, 88) angeordnete Klassiermittel (56, 86) aufweist, um die zur Durchführung einer repräsentativen Analyse notwendige Kornfraktion aus dem Staubgemisch abzutrennen, dadurch gekennzeichnet, daß die Vorrichtung in einem Abstand von der Saugöffnung (90) der Saugleitung (40) und in einem Abstand vom Schüttgutstrom positioniert ist und mit einem innerhalb eines ersten Gehäuses (44) angeordneten ersten Hohlsieb (56) versehen ist und die Eintrittsöffnung (108) im ersten Gehäuse (44) für das abgesaugte Gemisch außerhalb des ersten Hohlsiebes (56) angeordnet ist und das Innere dieses ersten Hohlsiebes (56) über eine Leitung (54) mit dem Inneren eines zweiten Hohlsieb (86) verbunden ist, das innerhalb eines zweiten Gehäuses (88) angeordnet ist, welches außerhalb des zweiten Hohlsiebes (86) mit einer Unterdruckquelle (42) verbunden ist, und die innere Querschnittsfläche des jeweiligen Gehäuses (44, 88) größer ist als die maximale Querschnittsfläche des zugeordneten Hohlsiebes (56, 86) und das erste Hohlsieb (56) den oberen Trennschnitt und das zweite Hohlsieb (86) den unteren Trennschnitt der zur Durchführung der Analyse erforderlichen Kornfraktion bestimmt.

2. Vorrichtung nach Anspruch 1, dadurch gekennzeichnet, daß das erste Hohlsieb (56) hohlzylindrisch ausgebildet ist.

3. Vorrichtung nach Anspruch 1, dadurch gekennzeichnet, daß das erste Gehäuse (44) für das erste Hohlsieb (56) innenseitig zylindrisch begrenzt und das erste zylindrische Hohlsieb (56) dazu koaxial angeordnet ist.

4. Vorrichtung nach Anspruch 1, dadurch gekennzeichnet, daß die Eintrittsöffnung (108) im ersten Gehäuse (44) derart angeordnet ist, daß das Gemisch in einer Richtung in das Gehäuse (44) eintritt, die ein direktes Auftreffen dieses Gemisches auf das innerhalb des Gehäuses angeordnete erste Hohlsieb (56) im wesentlichen vermeidet.

5. Vorrichtung nach Anspruch 4, dadurch gekennzeichnet, daß die Eintrittsöffnung (108) im ersten Gehäuse (44) im wesentlichen tangential zu dessen innerer zylindrischen Begrenzung verläuft.

6. Vorrichtung nach Anspruch 1, dadurch gekennzeichnet, daß das erste Gehäuse (44) mit einem verschließbaren Auslaß (48) für jene Teile des Staubgemisches, die nicht durch die Siebfläche des ersten Hohlsiebs (56) hindurch gesaugt werden, versehen ist.

7. Vorrichtung nach Anspruch 1, dadurch gekennzeichnet, daß das zweite Hohlsieb (86) hohlzylindrisch ausgebildet ist.

8. Vorrichtung nach Anspruch 1, dadurch gekennzeichnet, daß das zweite Gehäuse (88) für das zweite Hohlsieb (86) innenseitig zylindrisch begrenzt und das zweite Hohlsieb (86) dazu koaxial angeordnet ist.

9. Vorrichtung nach Anspruch 1, dadurch gekennzeichnet, daß das Innere des zweiten Hohlsiebes (86) über eine Rohrleitung (106) mit einem Analysegerät verbunden ist.

10. Vorrichtung nach Anspruch 1, dadurch gekennzeichnet, daß innerhalb des im wesentlichen zylindrischen ersten Hohlsiebes (56) ein Rotor (60) angeordnet ist, der an oder nahe seinem äußeren umfang mit Luftauslaßöffnungen versehen ist, die im wesentlichen gegen die Siebfläche gerichtet sind.

## Claims

1. Apparatus for preparing samples for the purposes of determining representative chemical and/or physical characteristics of the sampled material, which are removed in the form of a mix of fine and coarser particles of dust from a flow of bulk material by way of a suction conduit (40), wherein the apparatus has grading means (56, 86) which are arranged within at least one housing (44, 88) for separating from the dust mix the grain fraction required for performing a representative analysis operation, characterised in that the apparatus is positioned at a spacing from the suction opening (90) of the suction conduit (40) and at a spacing from the flow of bulk material and is provided with a first hollow sieve (56) arranged within a first housing (44), and the intake opening (108) in the first housing (44) for the mix which is sucked away is arranged outside the first hollow sieve (56) and the interior of said first hollow sieve (56) is communicated by way of a conduit (54) with the interior of a second hollow sieve (86) which is arranged within a second housing (88) which is communicated with a reduced pressure source (42) outside the second hollow sieve (86), and the internal cross-sectional area of the respective housing (44, 88) is larger than the maximum cross-sectional area of the associated hollow sieve (56, 86), and the first hollow sieve (56) determines the upper separation cut-off limit and the second hollow sieve (86) determines the lower separation cut-off limit of the grain fraction required for performing the analysis operation.

2. Apparatus according to claim 1 characterised in that the first hollow sieve (56) is of a hollow cylindrical configuration.

3. Apparatus according to claim 1 characterised in that the first housing (44) for the first hollow sieve (56) is of a cylindrical configuration in its interior and the first cylindrical hollow sieve (56) is arranged coaxially with respect thereto.

4. Apparatus according to claim 1 characterised in that the intake opening (108) in the first housing (44) is so arranged that the mix passes into the housing (44) in a direction which substantially avoids direct impingement of said mix on the first hollow sieve (56) which is arranged within the housing.

5. Apparatus according to claim 4 characterised in that the intake opening (108) in the first housing (44) extends substantially tangentially relative to the inner cylindrical configuration thereof.

6. Apparatus according to claim 1 characterised in that the first housing (44) is provided with a closable outlet (48) for those parts of the dust mix which are not sucked through the sieve surface of the first hollow sieve (56).

7. Apparatus according to claim 1 characterised in that the second hollow sieve (86) is of a hollow cylindrical configuration.

8. Apparatus according to claim 1 characterised in that the second housing (88) for the second hollow sieve (86) is of a cylindrical configuration in its interior and the second hollow sieve (86) is arranged coaxially with respect thereto.

9. Apparatus according to claim 1 characterised in that the interior of the second hollow sieve (86) is connected to an analysis means by way of a conduit (106).

10. Apparatus according to claim 1 characterised in that disposed within the substantially cylindrical first hollow sieve (56) is a rotor (60) which is provided at or adjacent its outer periphery with air outlet openings which are directed substantially towards the sieve surface.

## Revendications

1. Dispositif pour préparer des échantillons afin de déterminer les caractéristiques représentatives d'ordre chimique et/ou physique d'une matière à contrôler, ces échantillons étant prélevés sous forme de particules fines et grossières dans un courant de matière pulvérulente en vrac au moyen d'un conduit d'aspiration (40), le dispositif comportant des moyens de classification (56,86) qui sont contenus dans au moins un boîtier (44,88), pour séparer du mélange pulvérulent la fraction des granulats nécessaire pour effectuer une analyse représentative, caractérisé en ce que le dispositif est placé à une certaine distance de l'entrée (90) du conduit d'aspiration (40) et du courant de matière en vrac, ce dispositif étant pourvu d'un premier crible creux (56) monté dans un premier boîtier (44) dont l'orifice d'entrée (108) par où pénètre le mélange aspiré est situé à l'extérieur du premier crible creux (56), et le volume interne de ce premier crible creux (56) étant relié par un conduit (54) au volume interne d'un deuxième crible creux (86) qui est contenu dans un deuxième bottier (88) relié à une source de dépression (42) à l'extérieur du deuxième crible creux (86), en ce que chacun des bottiers (44,88) présente une section transversale de surface interne supérieure à la surface maximale de la section tansversale du crible creux correspondant (56,86), et en ce que le premier crible creux (56) détermine la limite de séparation supérieure de la tranche granulométrique de l'analyse à effectuer, alors que le deuxième crible creux en détermine la limite de séparation inférieure.

2. Dispositif selon la revendication 1, caractérisé en ce que le premier crible creux (56) est constitué par un cylindre creux.

3. Dispositif selon la revendication 1, caractérisé en ce que le premier bottier (44) qui contient le premier crible creux (56) présente une surface interne cylindrique par rapport à laquelle le premier crible creux cylindrique (56) est monté de manière coaxiale.

4. Dispositif selon la revendication 1, caractérisé en ce que l'orifice d'entrée (108) du premier bottier (44) est réalisé de telle manière que le mélange pénètre dans ce boîtier (44) dans une direction qui empêche sensiblement ce mélange de frapper directement le premier crible creux (56) contenu dans le boîtier.

5. Dispositif selon la revendication 4, caractérisé en ce que l'orifice d'entrée (108) du premier bottier (44) est orienté de manière sensiblement tangentielle par rapport à la surface cylindrique interne de ce boîtier (44).

6. Dispositif selon la revendication 1, caractérisé en ce que le premier boîtier (44) comporte un orifice de sortie obturable (48), pour les parties du mélange pulvérulent qui ne sont pas aspirées à travers la surface du premier crible creux (56).

7. Dispositif selon la revendication 1, caractérisé en ce que la deuxième cible creux (86) est constitué par un cylindre creux.

8. Dispositif selon la revendication 1, caractérisé en ce que le deuxième boîtier (88) qui contient le deuxième crible creux (86) présente une surface interne cylindrique, par rapport à laquelle le deuxième crible creux (86) est monté de manière coaxiale.

9. Dispositif selon la revendication 1, caractérisé en ce que le volume interne du deuxième crible creux (86) est relié par un conduit tubulaire (106) à un appareil d'analyse.

10. Dispositif selon la revendication 1, caractérisé en ce qu'il comporte un rotor (60) monté à l'intérieur du premier crible creux (56) qui est sensiblement cylindrique, ce rotor présentant à l'endroit ou au voisinage de son pourtour extérieur des orifices d'échappement d'air qui sont orientés sensiblement vers la surface du crible.

FIG.1

EP 0 331 903 B1

FIG.2

EP 0 331 903 B1